# EUROPÄISCHE PATENTSCHRIFT

(11) **EP 2 029 885 B1**
(45) Veröffentlichungstag und Bekanntmachung des Hinweises auf die Patenterteilung: **05.03.2014**
(21) Anmeldenummer: 07729857.8
(22) Anmeldetag: 04.06.2007
(51) Int. Cl.: F02M 37/22

(54) **KRAFTSTOFFFILTER**
FUEL FILTER
FILTRE À CARBURANT

(30) Priorität: 16.06.2006 DE 102006028148
(43) Veröffentlichungstag der Anmeldung: 04.03.2009
(73) Patentinhaber: MAHLE International GmbH, 70376 Stuttgart (DE)
(72) Erfinder: BRAUNHEIM, Michael, 73033 Göppingen (DE)
(74) Vertreter: BRP Renaud & Partner
(86) Internationale Anmeldenummer: PCT/EP2007/055469
(87) Internationale Veröffentlichungsnummer: WO 2007/144288

(56) Entgegenhaltungen:
- EP-A1- 0 166 160
- EP-A1- 0 300 910
- EP-A1- 0 863 305
- US-A- 4 617 116
- US-A- 5 649 561

## Beschreibung

Die vorliegende Erfindung betrifft ein Kraftstofffilter für eine Kraftstoffversorgungsanlage einer Brennkraftmaschine, insbesondere in einem Kraftfahrzeug.

Brennkraftmaschinen weisen zu ihrer Versorgung mit flüssigem Kraftstoff eine Kraftstoffversorgungsanlage auf. Eine derartige Kraftstoffversorgungsanlage umfasst üblicherweise einen Kraftstofftank, eine Kraftstoffpumpe, ein Kraftstofffilter sowie eine Einspritzanlage. Um die Gefahr einer Beschädigung der Einspritzanlage bzw. der Brennkraftmaschine zu reduzieren, ist es erforderlich, den der Brennkraftmaschine zugeführten Kraftstoff mit Hilfe des Kraftstofffilters von im Kraftstoff mitgeführten Verunreinigungen zu befreien. Beim Kraftstofffilter handelt es sich somit um ein für die Funktionssicherheit der Brennkraftmaschine relevantes Bauteil. Ein derartiges Kraftstofffilter besitzt üblicherweise ein Filtergehäuse, das einen rohseitigen Einlass und einen reinseitigen Auslass aufweist. Des weiteren ist ein Filterelement vorgesehen, das im Filtergehäuse angeordnet ist und das im Filtergehäuse einen mit dem Einlass kommunizierenden Rohraum von einem mit dem Auslass kommunizierenden Reinraum trennt. Beim Filterelement handelt es sich um ein Verschleißteil, das in bestimmten Wartungsintervallen ausgetauscht wird. Beim Austausch des Filterelements besteht die Gefahr, dass es nicht ordnungsgemäß in das Filtergehäuse eingebaut wird. Des weiteren besteht die Gefahr, dass das Kraftstofffilter versehentlich oder absichtlich ohne Filterelement betrieben wird. Bei fehlendem oder nicht ordnungsgemäß eingesetztem Filterelement besteht die Gefahr, dass Verunreinigungen ungehindert zur Einspritzanlage bzw. zur Brennkraftmaschine gelangen.

Ferner ist aus der US 5 649 561 A1 ein Kraftstofffilter gemäß dem Oberbegriff des Patentanspruchs 1 bekannt.

Die vorliegende Erfindung beschäftigt sich mit dem Problem, für ein Kraftstofffilter eine verbesserte Ausführungsform anzugeben. Bei welchem insbesondere die Gefahr, dass ungefilterter Kraftstoff zur Brennkraftmaschine gelangt, reduziert ist.

Bei der Erfindung wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Kraftstofffilter zusätzlich mit einem rohseitigen Rücklauf zu versehen, der im betriebsbereiten Zustand des Kraftstofffilters mit Hilfe eines Verschlusselements verschlossen ist. Bei nicht betriebsbereitem Zustand des Kraftstofffilters, also beispielsweise bei fehlendem Verschlusselement und/oder bei fehlendem Filterelement, ist der Rücklauf offen, so dass durch den Einlass in das Filtergehäuse geförderter Kraft-stoff bevorzugt durch den Rücklauf abfließt und beispielsweise in den Kraftstofftank zurückfließt. Durch den Auslass wird dann kein oder nicht genügend Kraftstoff gefördert. In der Folge kann die Brennkraftmaschine nicht gestartet werden. Die Gefahr einer Beschädigung der Einspritzanlage bzw. der Brennkraftmaschine lässt sich dadurch reduzieren. Damit bei fehlendem Filterelement der über den Einlass in das Filtergehäuse eintretende Kraftstoff durch den Rücklauf und nicht durch den Auslass austritt, kann beispielsweise der Strömungswiderstand durch den Rücklauf bis zum Tank deutlich geringer ausgelegt werden als der Strömungswiderstand vom Auslass bis zur Brennkraftmaschine. Bei eingesetztem Filterelement und bei fehlendem oder nicht ordnungsgemäß angebrachtem Verschlusselement ist der Rücklauf zum Rohraum offen, während der Auslass zum Reinraum hin offen ist und durch das Filterelement vom Rohraum getrennt ist. Durch das Filterelement ergibt sich zwangsläufig ein erhöhter Strömungswiderstand zum Auslass hin. Folglich tritt auch bei dieser Konstellation der Kraftstoff bevorzugt durch den Rücklauf aus dem Filtergehäuse aus. In der Folge verhindert bei dieser Konstellation das Filterelement eine Schmutzzufuhr zur Brennkraftmaschine, wobei diese gleichzeitig nicht gestartet werden kann, da sie durch den Auslass nicht oder nur umzureichend mit Kraftstoff versorgt wird.

Erfindungsgemäß ist das Verschlusselement am Filterelement ausgebildet oder angeordnet, und zwar so, dass das Verschlusselement bei ordnungsgemäß in das Filtergehäuse eingesetztem Filterelement den Rücklauf verschließt. Durch diese integrierte Bauweise wird sichergestellt, dass der Rücklauf nur bei eingesetztem und nur bei richtig eingesetztem Filterelement verschlossen ist. Mit anderen Worten der ordnungsgemäße Einbauzustand des Filterelements bzw. der betriebsbereite Zustand des Kraftstofffilters ergibt sich erst dann, wenn das Filterelement so in das Filtergehäuse eingesetzt ist, dass das Verschlusselement den Rücklauf verschließt. Die Zuverlässigkeit bzw. die Handhabbarkeit des Kraftstofffilters wird dadurch verbessert.

Bei einer anderen Ausführungsform kann eine Positioniereinrichtung vorgesehen sein, die wenigstens ein filterelementseitiges Positionierelement und wenigstens ein filtergehäuseseitiges Positionierelement aufweist, die beim Einsetzen des Filterelements in das Filtergehäuse zum Auffinden einer in einer Einsteckrichtung des als Zapfen ausgestalteten Verschlusselementes fluchtenden Ausrichtung zwischen dem Zapfen und einer zum Rohraum hin offenen Rücklauföffnung des Rücklaufs zusammenwirken. Durch diese Ausgestaltung wird beim Montieren des Kraftstofffilters das Auffinden der für das ordnungsgemäße Einsetzen des Filterelements erforderlichen Relativlage zwischen Filterelement und Filtergehäuse erleichtert. Die Gefahr einer fehlerhaften Montage wird dadurch reduziert.

Bei einer weiteren vorteilhaften Ausführungsform kann eine Führungseinrichtung vorgesehen sein, die wenigstens ein filterelementseitiges Führungselement und wenigstens ein filtergehäuseseitiges Führungselement aufweist, die beim Einsetzen des Filterelements in das Filtergehäuse nach dem Schlüssel-Schloss-Prinzip zusammenwirken, derart, dass sie nur bei zueinander passenden Führungselementen das Zusammenwirken zwischen den Positionierelementen der Positioniereinrichtung ermöglichen. Durch diese Bauweise wird die Gefahr reduziert, dass ein falsches Filterelement, also ein nicht speziell an das Kraftstofffilter adaptiertes Filterelement in das Filtergehäuse eingesetzt werden kann. Im Idealfall lässt sich eine Brennkraftmaschine, deren Kraftstoffversorgungsanlage mit dem erfindungsgemäßen Kraftstofffilter ausgestattet ist, nur dann starten, wenn in das Filtergehäuse das dafür vorgesehene richtige Filterelement ordnungsgemäß eingesetzt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische und teilweise geschnittene Ansicht eines Kraftstofffilters,
- Fig. 2: eine teilweise geschnittene und stark vereinfachte Seitenansicht im Bereich eines Rücklaufs beim Montieren eines Filterelements,
- Fig. 3: eine perspektivische Ansicht auf einen Deckel des Filtergehäuses in einer vereinfachten Darstellung,
- Fig. 4: eine Draufsicht auf den Deckel gemäß Fig. 3 entsprechend einem Pfeil IV in Fig. 3,
- Fig. 5: eine Ansicht wie in Fig. 4, jedoch bei einer anderen Ausführungsform,
- Fig. 6: eine Detailschnitt entsprechend Schnittlinien VI in Fig. 4.

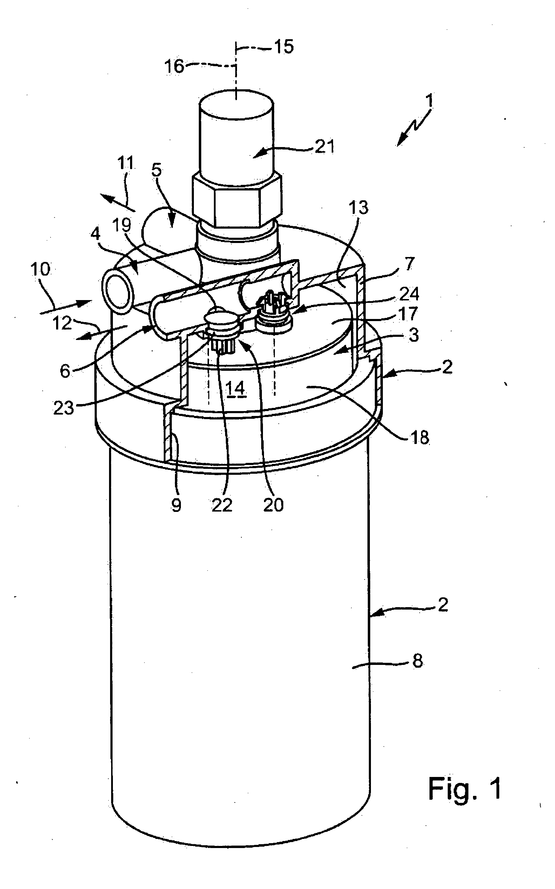

Entsprechend Fig. 1 umfasst ein Kraftstofffilter 1, das zum Filtern eines flüssigen Kraftstoffs, wie z.B. Benzin oder Diesel, geeignet ist, ein Filtergehäuse 2 und ein Filterelement 3. Das Filtergehäuse 2 weist einen rohseitigen Einlass 4, einen reinseitigen Auslass 5 sowie einen rohseitigen Rücklauf 6 auf. Das Filtergehäuse 2 ist aus einem topfförmigen Deckel 7 und einem topfförmigen Boden 8 zusammengebaut, die über eine Gewindeverbindung 9 miteinander verschraubbar sind. Einlass 4, Auslass 5 und Rücklauf 6 sind hier am Deckel 7 ausgebildet. Das Filtergehäuse 2 ist bevorzugt für eine hängende Einbauposition vorgesehen, so dass für die Wartung des Kraftstofffilters 1 der Boden 8 nach unten abschraubbar ist, während der obenliegende Deckel 7 ortsfest verbleibt. Alternativ kann auch eine stehende Einbauposition vorgesehen sein, bei der dann der Deckel 7 mit den Anschlüssen 4, 5 und 6 unten angeordnet ist, ortsfest verbleibt und funktionell eher einen "Gehäuseboden" bildet, während in dieser Einbausituation der Boden 8 oben angeordnet ist, nach oben abschraubbar ist und funktionell eher einen "Gehäusedeckel" bildet. Die axialen Abmessungen können dabei variieren. Insbesondere kann bei stehender Anordnung der Deckel 7, also der funktionelle Gehäuseboden den Großteil des Filterelements 3 aufnehmen, während bei der gezeigten hängenden Anordnung der Boden 8 den Großteil des Filterelements 3 aufnimmt.

Das Kraftstofffilter 1 ist für den Einbau in eine Kraftstoffversorgungsanlage einer Brennkraftmaschine, die vorzugsweise in einem Kraftfahrzeug angeordnet ist, vorgesehen. Hierzu sind der Einlass 4 an eine durch einen Pfeil symbolisierte Einlassleitung 10 der Kraftstoffversorgungsanlage, der Auslass 5 an eine durch einen Pfeil symbolisierte Auslassleitung 11 der Kraftstoffversorgungsanlage und der Rücklauf 6 an eine durch einen Pfeil symbolisierte Rücklaufleitung 12 der Kraftstoffversorgungsanlage anschließbar. Die Einlassleitung 10 enthält beispielsweise eine Kraftstoffpumpe und kommt von einem Kraftstofftank. Die Auslassleitung 11 führt beispielsweise zu einer Kraftstoffeinspritzanlage. Die Rücklaufleitung 12 führt vorzugsweise zum Kraftstofftank zurück.

Das Filterelement 3 ist im montierten Zustand des Kraftstofffilters 1 im Filtergehäuse 2 angeordnet, und zwar so, dass es im Filtergehäuse 2 einen Rohraum 13 von einem Reinraum 14 trennt. Im gezeigten Ausführungsbeispiel ist das Filterelement 3 ohne Beschränkung der Allgemeinheit als Ringfilterelement ausgestaltet, das bezüglich einer Längsmittelachse 15 des Ringfilterelements 3 koaxial zu einer Längsmittelachse 16 des Filtergehäuses 2 angeordnet ist. Des weiteren besitzt das Ringfilterelement 3 zumindest eine axiale Endscheibe 17, wobei in Fig. 1 nur eine Endscheibe 17 erkennbar ist. Die jeweilige Endscheibe 17 begrenzt ein radial durchströmbares Filtermaterial 18 axial.

Der Einlass 4 kommuniziert über eine nicht gezeigte Einlassöffnung mit dem Rohraum 13, und der Auslass 5 kommuniziert über eine nicht gezeigte Auslassöffnung mit dem Reinraum 14. Des weiteren kommuniziert der Rücklauf 6 ebenfalls mit dem Rohraum 13. Hierzu enthält der Rücklauf 6 beispielsweise eine zum Rohraum 13 hin offene Rücklauföffnung 19.

Beim Kraftstofffilter 1 ist außerdem ein Verschlusselement 20 vorgesehen, das dazu dient, den Rücklauf 6 im betriebsbereiten Zustand des Kraftstofffilters 1 zu verschließen. Hierzu verschließt das Verschlusselement 20 beispielsweise die Rücklauföffnung 19. Im betriebsbereiten Zustand des Kraftstofffilters 1, also bei verschlossenem Rücklauf 6 fördert die Kraftstoffpumpe im Betrieb der Kraftstoffversorgungsanlage Kraftstoff durch den Einlass 4 in den Rohraum 13. Vom Rohraum 13 gelangt der Kraftstoff durch das Filtermaterial 18 radial zum Reinraum 14. Aus dem Reinraum 14 tritt der Kraftstoff durch den Auslass 5 wieder aus dem Filtergehäuse 2 aus. Bei fehlendem Verschlusselement 20 bzw. bei nicht durch das Verschlusselement 20 verschlossenem Rücklauf 6 kann der Kraftstoff vom Rohraum 13 direkt durch den Rücklauf 6 aus dem Filtergehäuse 2 austreten. Der Strömungswiderstand durch das Filtermaterial 18 zur Reinseite 14 sorgt dabei dafür, dass sich im Reinraum 14 also am Auslass 5 der zum Starten der Brennkraftmaschine erforderliche Kraftstoffdruck nicht aufbauen lässt, da der Kraftstoff vom Rohraum 13 im wesentlichen ungehindert durch den Rücklauf 6 abfließen kann.

Bei der hier gezeigten bevorzugten Ausführungsform kann das Kraftstofffilter 1 außerdem mit einem Drucksensor 21 ausgestattet sein, mit dessen Hilfe der reinseitige Kraftstoffdruck gemessen werden kann. Der Drucksensor 21 ist z.B. am Deckel 7 angebracht. Beispielsweise kann beim Starten der Brennkraftmaschine ein Motorsteuergerät den Druckaufbau im Reinraum 14 überwachen und erst bei einem hinreichenden Druckaufbau entsprechende Startsignale zum Starten der Brennkraftmaschine generieren. Bei unverschlossenem Rücklauf 6 kann sich der hierzu erforderliche Druck im Reinraum 14 nicht aufbauen, so dass die benötigten Startsignale nicht generiert werden. Im übrigen kann bei offenem Rücklauf 6 der Druckaufbau im Reinraum 14 so gering ausfallen, dass eine zum Starten der Brennkraftmaschine benötigte Kraftstoffversorgung nicht möglich ist, so dass die Brennkraftmaschine schon aufgrund der mangelnden oder fehlenden Kraftstoffversorgung nicht gestartet werden kann. Diese Bauweise beruht auf der Überlegung, dass der unverschlossene Rücklauf als Anzeichen dafür ausgewertet wird, dass das Verschlusselement 20 nicht oder nicht ordnungsgemäß in die Rücklauföffnung 19 eingesetzt ist und/oder dass das Filterelement 3 nicht oder nicht ordnungsgemäß in das Filtergehäuse 2 eingesetzt ist. Ebenso kann der unverschlossene Rücklauf 6 darauf hinweisen, dass ein falsches Filterelement in das Filtergehäuse 2 eingesetzt worden ist. Bei den genannten Zuständen ist das Kraftstofffilter 1 nicht betriebsbereit. Ein Starten der Brennkraftmaschine sollte dann unterbleiben, um eine Beschädigung der Brennkraftmaschine bzw. der Einspritzanlage durch ungefilterten Kraftstoff zu vermeiden. Mit Hilfe des vorgeschlagenen Kraftstofffilters 1 wird dieses Ziel vergleichsweise einfach und wirkungsvoll erreicht.

Erfindungsgemäß ist das Verschlusselement 20 am Filterelement 3 ausgebildet bzw. daran angeordnet. Der Rücklauf 6 ist damit automatisch verschlossen, wenn das Filterelement 3 ordnungsgemäß in das Filtergehäuse 2 eingesetzt ist. Ein fehlendes Filterelement 3, ein falsch eingesetztes Filterelement 3 und die Verwendung eines falschen Filterelementes 3 haben jeweils einen unverschlossenen Rücklauf 6 zur Folge, wodurch das Starten der Brennkraftmaschine verhindert werden kann.

Im Beispiel ist das Verschlusselement 20 an der dem Deckel 7 zugewandten Endscheibe 17 angeordnet. Das Verschlusselement 20 ist hier als Zapfen 22 ausgestaltet, der axial von der Endscheibe 17, also parallel zur Längsmittelachse 15 des Ringfilterelements 3 absteht. Der Zapfen 22 wirkt zum Verschließen des Rücklaufs 6 mit der Rücklauföffnung 19 zusammen. Insbesondere ist der Zapfen 22 in die Rücklauföffnung 19 axial einsteckbar. Der Zapfen 22 kann mit einer Radialdichtung 23, insbesondere ein O-Ring, ausgestattet sein. Die Rücklauföffnung 19 kann mit einem nicht näher bezeichneten Stutzen oder Rohrabschnitt ausgestattet sein. Im eingesteckten Zustand bewirkt die Radialdichtung 23 eine hinreichende Abdichtung der Rücklauföffnung 19.

Bei der hier gezeigten Ausführungsform ist das Kraftstofffilter 1 außerdem mit einer Entlüftungsdrossel 24 ausgestattet, über die der Rücklauf 6 ebenfalls mit dem Rohraum 13 kommuniziert. Die Entlüftungsdrossel 24 zeichnet sich durch einen Durchströmungswiderstand aus, der deutlich größer ist als der Durchströmungswiderstand des Filterelements 3 und des Auslasses 5 bei verschlossenem Rücklauf 6. Bei verschlossenem Rücklauf 6 ermöglicht die Entlüftungsdrossel 24 beim Starten der Brennkraftmaschine eine Entlüftung des Filtergehäuses 2. Im anschließenden Normalbetrieb lässt sie eine vergleichsweise kleine Rücklaufströmung durch den Rücklauf 6 zu, die jedoch aufgrund der vergleichsweise starken Drosselwirkung der Entlüftungsdrossel 24 den erforderlichen Druckaufbau im Reinraum 14 nicht behindert. Insbesondere ist der Durchströmungswiderstand der Entlüftungsdrossel 24 schon größer als der Durchströmungswiderstand des Filterelements 3 allein.

Bei stehender Anordnung ist auch eine andere, insbesondere höher liegende, Positionierung der Entlüftungsdrossel 24 vorstellbar. Bei stehender Anordnung kann der Rücklauf 6, der dann unten angeordnet ist, als Leerlauf dienen, der sich beim Abnehmen des obenliegenden Bodens 8 bzw. beim Herausziehen des Filterelements 3 automatisch öffnet.

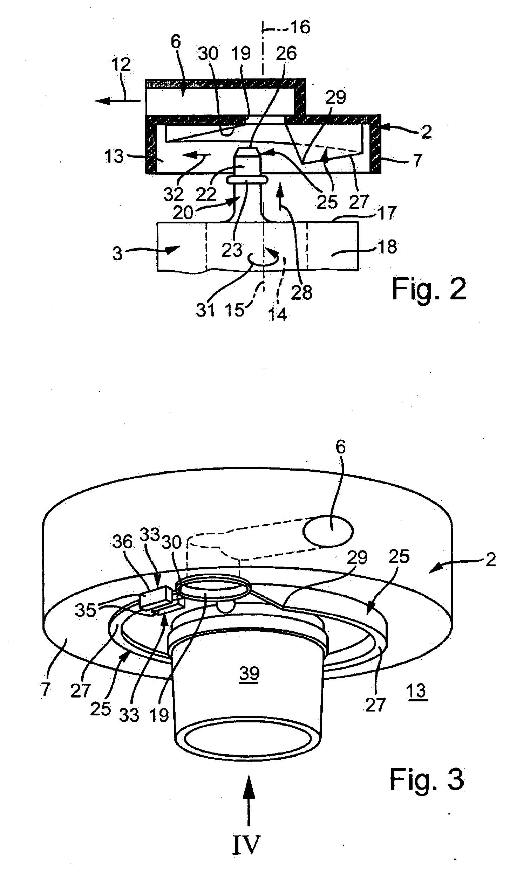

Entsprechend den Fig. 2 bis 6 kann das Kraftstofffilter 1 mit einer Positioniereinrichtung 25 ausgestattet sein. Die Positioniereinrichtung 25 umfasst wenigstens ein filterelementseitiges Positionierelement, das hier durch eine Gleitfläche 26 am freien Ende des Zapfens 22 gebildet ist, sowie wenigstens ein filtergehäuseseitiges Positionierelement, das hier durch eine Rampe 27 gebildet ist. Die Positionierelemente 26, 27 sind so ausgestaltet, dass sie beim Einsetzen des Filterelements 3 in das Filtergehäuse 2 zum Auffinden einer in einer Einsteckrichtung 28 des Zapfens 22 fluchtenden Ausrichtung zwischen dem Zapfen 22 und der Rücklauföffnung 19 zusammenwirken.

Bei den hier gezeigten bevorzugten Ausführungsformen ist als filtergehäuseseitiges Positionierelement besagte Rampe 27 vorgesehen, die in den Rohraum 13 axial vorsteht. Die Rampe 27 beginnt bei 29 an der Rücklauföffnung 19 und endet bei 30 ebenfalls an der Rücklauföffnung 19. Zwischen ihrem Beginn 29 und ihrem Ende 30 erstreckt sich die Rampe 27 konzentrisch zur Längsmittelachse 16 des Filtergehäuses 2 kreisförmig bzw. schraubenförmig. Von ihrem Beginn 29 bis zu ihrem Ende 30 fällt die Rampe 27 zur Rücklauföffnung 19 hin ab. Als filterelementseitiges Positionierelement ist besagte Gleitfläche 26 am Zapfen 22 ausgebildet und zwar an einer von der Endscheibe 17 entfernten Seite des Zapfens 22. Der Zapfen 22 ist hierbei bezüglich der Längsmittelachse 15 des Filterelements 3 exzentrisch angeordnet, wobei die Exzentrizität des Zapfens 22 etwa gleich groß gewählt ist wie der Radius der Rampe 27. Dementsprechend kann der Zapfen 22 beim Einführen des Filterelements 3 koaxial zur Längsmittelachse 16 des Filtergehäuses 2 mit seiner Gleitfläche 26 axial an der Rampe 27 zur Anlage kommen. Beim Drehen des Filterelements 3 um dessen Längsmittelachse 15 entsprechend einem Pfeil 31 gleitet der Zapfen 22 mit seiner Gleitfläche 26 entlang der Rampe 27 ab. Hierbei erfolgt zwangsläufig die Ausrichtung des Zapfens 22 zur Rücklauföffnung 19. Eine entsprechende Abgleitbewegung ist in Fig. 2 durch einen Pfeil 32 symbolisiert. Die Orientierung der Rampensteigung ist dabei zweckmäßig so gewählt, dass die Drehrichtung beim Festschrauben des Bodens 8 für das darin angeordnete Filterelement 3 zwangsläufig die gewünschte Drehbewegung 31 erzeugt, wodurch das Filterelement 3 beim Anbringen des Bodens 8 automatisch entlang der Rampe 27 abgleitet. Bei Erreichen der fluchtenden Ausrichtung zwischen Zapfen 22 und Rücklauföffnung 19 begrenzt der Beginn 29 der Rampe 27 ein Weiterdrehen des Filterelements 3. Bei weitergehendem Festschrauben des Bodens 8 wird das Filterelement 3 zwangsläufig mit seinem Zapfen 22 entsprechend der Einsteckrichtung 28 in die Rücklauföffnung 19 eingeführt.

Entsprechend den Fig. 3 bis 6 kann das Kraftstofffilter 1 außerdem mit einer Führungseinrichtung 33 ausgestattet sein. Diese Führungseinrichtung 33 kann wenigstens ein filterelementseitiges Führungselement, das beispielsweise durch einen am Zapfen 22 ausgebildeten Führungsabschnitt 34 gebildet sein kann, sowie wenigstens ein filtergehäuseseitiges Führungselement aufweisen, das beispielsweise durch eine oder mehrere Führungswände 35 gebildet sein kann. Die Führungselemente 34, 35 sind so ausgestaltet, dass sie beim Einsetzen des Filterelements 3 in das Filtergehäuse 2 nach dem "Schlüssel-Schloss-Prinzip" zusammenwirken. Das bedeutet, dass die Führungselemente 34, 35 das Zusammenwirken zwischen den Positionierelementen 26, 27, also zwischen der Rampe 27 und der Gleitfläche 26 nur dann ermöglichen, wenn die zueinander passenden Führungselement 34, 35 miteinander zusammenwirken. Für den Fall, dass die beim Einsetzen des Filterelements 3 in das Filtergehäuse 2 miteinander zusammenwirkenden Führungselemente 34, 35 nicht zueinander passen, wird durch die Führungseinrichtung 33 das Zusammenwirken der Positionierelemente 26, 27 zum Auffinden der fluchtenden Ausrichtung zwischen Zapfen 22 und Rücklauföffnung 19 erheblich behindert oder unmöglich.

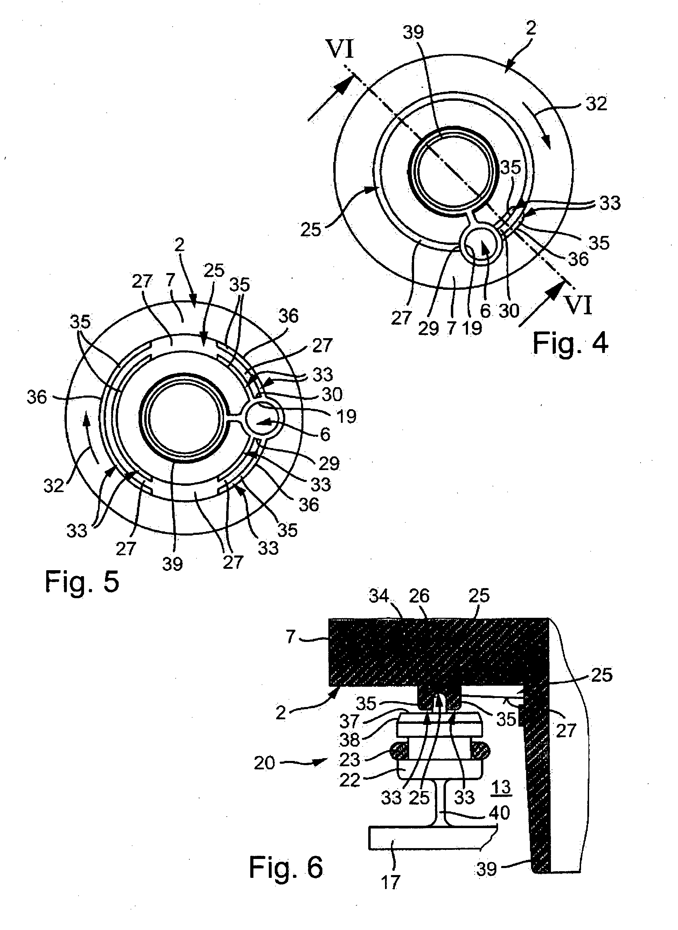

Im gezeigten Ausführungsbeispiel sind die filtergehäuseseitigen Führungselemente durch Führungswände 35 gebildet, die sich entlang wenigstens eines Erstreckungsabschnitts 36 der Rampe 27 radial innen und/oder radial außen erstrecken und dabei über die Rampe 27 in axialer Richtung vorstehen. Bei den Beispielen der Fig. 3 und 4 ist jeweils nur ein einziger Erstreckungsabschnitt 36 vorgesehen, der im Bereich des Endes 30 der Rampe 27 positioniert ist. Dabei sind im Erstreckungsabschnitt 36 zwei parallele Führungswände 35 vorgesehen, von denen die eine radial innen und die andere radial außen die Rampe 27 begrenzt. Bei der in Fig. 5 gezeigten Ausführungsform sind insgesamt drei Erstreckungsabschnitte 36 vorgesehen, in denen jeweils zwei parallel verlaufende Führungswände 35 vorgesehen sind, welche die Rampe 27 radial innen und außen begrenzen. Das filterelementseitige Führungselement ist bei den hier gezeigten Ausführungsformen durch den Führungsabschnitt 34 ausgebildet, der an der von der Endscheibe 17 abgewandten oder entfernten Seite des Zapfens 22 axial vorsteht. Besagter Führungsabschnitt 34 weist die Gleitfläche 26 des Zapfens 22 auf. Des weiteren ist der Führungsabschnitt 34 hinsichtlich seiner Positionierung am Zapfen 22 und hinsichtlich seiner Dimensionierung so auf die Führungswände 35 abgestimmt, dass sich der Führungsabschnitt 34 bei der Montage des Kraftstofffilters 1 radial neben der jeweiligen Führungswand 35 beziehungsweise zwischen den beiden parallelen Führungswänden 35 erstreckt und dabei die Gleitfläche 26 axial an der Rampe 27 zur Anlage bringt sowie den Zapfen 22 gegenüber der jeweiligen Führungswand 35 axial beabstandet hält. Dieser Zusammenhang ist besonders deutlich in Fig. 6 erkennbar. Dort berührt der Führungsabschnitt 34 mit der Gleitfläche 26 die zwischen den Führungswänden 35 verlaufende Rampe 27 und gewährleistet ein Axialspiel zwischen den Wänden 35 und einer von der Endscheibe 17 abgewandten oder entfernten Außenseite 37 des Zapfens 22, von welcher der Führungsabschnitt 34 vorsteht. Besagte Außenfläche 37 kann eben sein und kann über eine Phase 38 in den übrigen Zapfen 22 übergehen.

Das vorstehend genannte Schlüssel-Schloss-Prinzip bewirkt nun, dass der Zapfen 22 mit seiner Gleitfläche 26 nur dann entlang der gesamten Rampe 27 bis zur fluchtenden Ausrichtung zur Rücklauföffnung 19 abgleiten kann, wenn der Führungsabschnitt 34 vorhanden ist, wenn der Führungsabschnitt 34 in radialer Richtung hinreichend schmal ist, um zwischen den einander gegenüberliegenden Führungswänden 35 hindurchzupassen, und wenn der Führungsabschnitt 35 in axialer Richtung hinreichend lang ist, um das erforderliche Axialspiel zwischen Zapfen 22 und den Führungswänden 35 einzustellen. Bei fehlendem oder falschem Führungsabschnitt 34 würde der Zapfen 22 beim Abgleiten entlang der Rampe 27 in Umfangsrichtung an stirnseitigen Enden der Wände 35 zur Anlage kommen, wodurch die Drehbarkeit des Filterelements 3 blockiert wird. Das Filterelement 3 lässt sich dann nicht ohne weiteres ordnungsgemäß montieren.

In den Fig. 3 bis 6 ist außerdem ein Auslassstutzen 39 dargestellt, der am Deckel 7 vorgesehen sein kann und auf den das Filterelement 3 aufsteckbar sein kann. Fig. 6 zeigt eine spezielle Ausführungsform, bei welcher der Zapfen 22 über einen Steg 40 an der Endscheibe 17 angebracht ist. Besagter Steg 40 ist in radialer Richtung flexibel und ermöglicht einen Toleranzausgleich zwischen der radialen Lage des Führungsabschnitts 34 und der radialen Lage der Führungswände 35. Wie aus Fig. 1 hervorgeht, kann der Zapfen 22 auch vergleichsweise steif an der Endscheibe 17 angebracht sein.

## Patentansprüche

1. Kraftstofffilter für eine Kraftstoffversorgungsanlage einer Brennkraftmaschine, insbesondere in einem Kraftfahrzeug,
- mit einem Filtergehäuse (2), das einen rohseitigen Einlass (10), einen reinseitigen Auslass (5) und einen rohseitigen Rücklauf (6) aufweist,
- mit einem Filterelement (3), das im Filtergehäuse (2) angeordnet ist und das im Filtergehäuse (2) einen mit dem Einlass (4) und mit dem Rücklauf (6) kommunizierenden Rohraum (13) von einem mit dem Auslass (5) kommunizierenden Reinraum (14) trennt,
- wobei ein Verschlusselement (20) vorgesehen ist, das im betriebsbereiten Zustand des Kraftstofffilters (1) den Rücklauf (6) verschließt,
**dadurch gekennzeichnet,**
**dass** das Verschlusselement (20) am Filterelement (3) ausgebildet oder angeordnet ist und den Rücklauf (6) bei ordnungsgemäß in das Filtergehäuse (2) eingesetztem Filterelement (3) verschließt.

2. Kraftstofffilter nach Anspruch 1,
**dadurch gekennzeichnet,**
**dass** das Verschlusselement (20) an einer Endscheibe (17) des als Ringfilterelement mit wenigstens einer axialen Endscheibe (17) ausgestalteten Filterelements (3) angeordnet ist.

3. Kraftstofffilter nach Anspruch 1 oder 2,
**dadurch gekennzeichnet,**
**dass** das Verschlusselement (20) als axial von der jeweiligen Endscheibe (17) abstehender Zapfen (22) ausgestaltet ist, der zum Verschließen des Rücklaufs (6) eine den Rücklauf (6) mit dem Rohraum (13) verbindende Rücklauföffnung (19) verschließt.

4. Kraftstofffilter nach einem der Ansprüche 1 bis 3,
**dadurch gekennzeichnet,**
**dass** eine Positioniereinrichtung (25) vorgesehen ist, die wenigstens ein filterelementseitiges Positionierelement (22) und wenigstens ein filtergehäuseseitiges Positionierelement (27) aufweist, die beim Einsetzen des Filterelements (3) in das Filtergehäuse (2) zum Auffinden einer in einer Einsteckrichtung (28) des als Zapfen (22) ausgestalteten Verschlusselements (20) fluchtenden Ausrichtung zwischen dem Zapfen (22) und einer zum Rohraum (13) hin offenen Rücklauföffnung (19) des Rücklaufs (6) zusammenwirken.

5. Kraftstofffilter nach Anspruch 3 oder 4,
**dadurch gekennzeichnet,**
- **dass** das Filtergehäuse (2) eine in den Rohraum (13) vorstehende Rampe (27) aufweist, die an der Rücklauföffnung (19) beginnt, sich konzentrisch zu einer Längsmittelachse (16) des Filtergehäuses (2) kreisförmig erstreckt, an der Rücklauföffnung (19) endet und von ihrem Beginn (29) zu ihrem Ende (39) zur Rücklauföffnung (19) hin abfällt,
- **dass** der Zapfen (22) exzentrisch zu einer Längsmittelachse (15) des Filterelements (3) angeordnet ist und eine Gleitfläche (26) aufweist, mit der er beim Drehen des Filterelements (3) um die Längsmittelachse (16) des Filtergehäuses (2) zum Ausrichten des Zapfens (22) zur Rücklauföffnung (19) entlang der Rampe (27) abgleitet.

6. Kraftstofffilter nach Anspruch 4 oder 5,
**dadurch gekennzeichnet,**
**dass** eine Führungseinrichtung (33) vorgesehen ist, die wenigstens ein filterelementseitiges Führungselement (34) und wenigstens ein filtergehäuseseitiges Führungselement (35) aufweist, die beim Einsetzen des Filterelements (3) in das Filtergehäuse (2) nach dem Schlüssel-Schloss-Prinzip zusammenwirken, derart, dass sie nur bei zueinander passenden Führungselementen (34, 35) das Zusammenwirken zwischen den Positionierelementen (26, 27) und/oder zwischen Rampe (27) und Gleitfläche (26) ermöglichen.

7. Kraftstofffilter nach einem der Ansprüche 4 bis 6,
**dadurch gekennzeichnet,**
- **dass** die Rampe (27) entlang ihrer gesamten Erstreckung oder zumindest entlang wenigstens eines Erstreckungsabschnitts (36) radial innen und/oder radial außen durch zumindest eine axial über die Rampe (27) vorstehende Führungswand (35) begrenzt ist,
- **dass** der Zapfen (22) einen axial vorstehenden Führungsabschnitt (34) aufweist, der die Gleitfläche (26) aufweist und der so positioniert und dimensioniert ist, dass er sich radial neben der jeweiligen Führungswand (35) erstreckt und dabei die Gleitfläche (26) axial an der Rampe (27) zur Anlage bringt und den Zapfen (22) gegenüber der jeweiligen Führungswand (35) axial beabstandet hält.

8. Kraftstofffilter nach einem der Ansprüche 1 bis 7,
**dadurch gekennzeichnet,**
**dass** der Rücklauf (6) zusätzlich über eine Entlüftungsdrossel (24) mit dem Rohraum (13) kommuniziert, deren Durchströmungswiderstand größer ist als der Durchströmungswiderstand durch das Filterelement (3) und durch den Auslass (5) bei verschlossenem Rücklauf (6).

9. Kraftstofffilter nach einem der Ansprüche 1 bis 8,
**dadurch gekennzeichnet,**
**dass** ein Drucksensor (21) zum Messen des reinseitigen Kraftstoffdrucks vorgesehen ist.

10. Kraftstoff-Filterelement für ein Kraftstofffilter (1), insbesondere nach einem der Ansprüche 1 bis 9, wobei das Filterelement (3) als Ringfilterelement ausgestaltet ist und wenigstens eine axiale Endscheibe (17) aufweist, von der ein Verschlusselement (20), insbesondere ein Zapfen (22), axial und exzentrisch absteht, das bei ordnungsgemäß in ein Filtergehäuse (2) des Kraftstofffilters (1) eingesetztem Filterelement (3) einen rohseitigen Rücklauf (6) des Filtergehäuses (2) verschließt.

## Claims

1. A fuel filter for an fuel supply system of an internal combustion engine, in particular in a motor vehicle,
- comprising a filter housing (2), which has an untreated-side inlet (10), a treated-side outlet (5) and a untreated-side return line (6),
- comprising a filter element (3) which is arranged in the filter housing (2), and which separates in the filter housing (2) an untreated space (13) communicating with the inlet (4) and the return line (6) from a treated space (14) communicating with the outlet (5),
- wherein a closure element (20) is provided, which in the operationally ready state of the fuel filter (1) closes-off the return Line (6),
**characterized in**
**that** the closure element (20) is formed or arranged at the filter element (3), and, with filter element (3) properly inserted into the filter housing (2), closes-off the return line (6).

2. The fuel filter according to claim 1,
**characterized in**
**that** the closure element (20) is arranged at an end disk (17) of the filter element (3) shaped as ring filter element having at least one axial end disk (17).

3. The fuel filter according to claim 1 or 2,
**characterized in**
**that** the closure element (20) is shaped as pin (22) which projects axially from the respective end disk (17), and which, for closing the return line (6), closes-off a return line opening (19), which connects the return line (6) with the untreated space (13).

4. The fuel filter according to any one of the claims 1 to 3,
**characterized in**
**that** a positioning device (25) is provided which comprises at least one positioning element (22) on the filter element side, and at least one positioning element (27) on the filter housing side, which interact during inserting of the filter element (3) into the filter housing (2) for finding of an orientation, which is aligned with the insertion direction (28) of the closure element (20) shaped as a pin (22), between the pin (22) and a return line opening (19), which is open towards the untreated space (13), of the return line (6).

5. The fuel filter according to claim 3 or 4,
**characterized in**
- **that** the filter housing (2) comprises a ramp (27) which projects into the untreated space (13), which begins at the return line opening (19), extends circular concentric to a longitudinal center axis (16) of the filter housing (2), ends at the return line opening (19), and declines from its beginning (29) to its end (39) towards the return line opening (19),
- **that** the pin (22) is arranged eccentric to a longitudinal center axis (15) of the filter element (3) and comprises a slide face (26), by means of which it slides along the ramp (27) during turning of the filter element (3) around the longitudinal center axis (16) of the filter housing (2) for orienting the pin (22) towards the return line opening (19).

6. The fuel filter according to claim 4 or claim 5, **characterized in that** a guiding device (33) is provided which comprises at least one guiding element (34) on the filter element side, and at least one guiding element (35) on the filter housing side, which interact during insertion of the filter element (3) into the filter housing (2) according to the key-lock principle such that they allow the interacting between the positioning elements (26, 27) and/or between the ramp (27) and the slide face (26) only in case of matching guiding elements (34, 35).

7. The fuel filter according to any one of the claims 4 to 6,
**characterized in**
- **that** the ramp (27) along its entire extension, or at least along an extension section (36), is bordered radially inside and/or radially outside by at least one guiding wall (35) which projects axially beyond the ramp (27),
- **that** the pin (22) comprises an axially projecting guiding section (34) which comprises the slide face (26) and which is positioned and dimensioned such that it extends radially alongside the respective guiding wall (35) and thereby rests the slide face (26) axially against the ramp (27), and keeps the pin (22) axially spaced apart from the respective guiding wall (35).

8. The fuel filter according to any one of the claims 1 to 7,
**characterized in**
**that** the return line (6) in addition communicates with the untreated space (13) through a vent throttle (24), the flow-through resistance of which is higher than the flow-through resistance through the filter element (3) and through the outlet (5) at closed-off return line (6).

9. The fuel filter according to any one of the claims 1 to 8,
**characterized in that** a pressure sensor (21) is provided for measuring the treated-side fuel pressure.

10. A fuel filter element for a fuel filter (1), in particular according to any one of the claims 1 to 9, wherein the filter element (3) is shaped as ring filter element, and comprises at least one axial end disk (17), from which a closure element (20), in particular a pin (22), projects axially and eccentrically, which in case of a filter element (3) properly inserted into a filter housing (2) of the fuel filter (1), closes-off an untreated-side return line (6) of the filter housing (2).

## Revendications

1. Filtre à carburant pour installation d'alimentation en carburant d'un moteur à combustion interne, notamment dans un véhicule automobile,
- comportant un logement de filtre (2), qui présente une admission (10) du côté brut, un échappement du côté purifié (5) et un circuit retour (6) du côté brut,
- comportant un élément de filtre (3), qui est disposé dans le logement de filtre (2) et qui sépare dans le logement de filtre (2) un espace brut (13) communiquant avec l'admission (4) et avec le circuit retour (6) d'un espace purifié (14) communiquant avec l'échappement (5),
- dans lequel un élément d'obturation (20) est prévu, qui en l'état prêt à fonctionner du filtre à carburant (1) obture le circuit retour (6),
**caractérisé en**
**ce que** l'élément d'obturation (20) est réalisé ou disposé sur l'élément de filtre (3) et obture le circuit retour (6) lorsque l'élément de filtre (3) est correctement inséré dans le logement de filtre (2).

2. Filtre à carburant selon la revendication 1,
**caractérisé en**
**ce que** l'élément d'obturation (20) est disposé sur une rondelle d'extrémité (17) de l'élément de filtre (3) conçu comme élément de filtre annulaire avec au moins une rondelle d'extrémité axiale (17).

3. Filtre à carburant selon les revendications 1 ou 2,
**caractérisé en**
**ce que** l'élément d'obturation (20) est conçu comme un tenon (22) dépassant axialement de la rondelle d'extrémité (17) respective, qui obture afin de fermer le circuit retour (6) une ouverture de retour (19) reliant le circuit retour (6) à l'espace brut (13).

4. Filtre à carburant selon une des revendications 1 à 3,
**caractérisé en**
**ce que** un dispositif de positionnement (25) est prévu, qui présente au moins un élément de positionnement (22) du côté d'élément de filtre et au moins un élément de positionnement (27) du côté de logement de filtre, qui coopèrent lors de l'insertion de l'élément de filtre (3) dans le logement de filtre (2)pour détecter un alignement s'alignant dans une direction d'insertion (28) de l'élément d'obturation (20) conçu comme un tenon (22) entre le tenon (22) et une ouverture de retour (19) du circuit retour (6) ouverte dans la direction de l'espace brut (13).

5. Filtre à carburant selon la revendication 3 ou 4,
**caractérisé en:**
- **ce que** le logement de filtre (2) présente une rampe (27) faisant saillie à l'intérieur de l'espace brut (13), qui commence à l'ouverture de retour (19), s'étend concentriquement en forme de cercle jusqu'à un axe médian longitudinal (16) du logement de filtre (2), se termine à l'ouverture de retour (19) et va en baissant de son début (29) jusqu'à sa fin (39) à l'ouverture de retour (19),
- ce que le tenon (22) est disposé de manière excentrée par rapport à un axe médian longitudinal (15) de l'élément de filtre (3) et présente une surface de glissement (26), avec laquelle il coulisse lors de la rotation de l'élément de filtre (3) autour de l'axe médian longitudinal (16) du logement de filtre (2) afin d'aligner le tenon (22) par rapport à l'ouverture de retour (19) le long de la rampe (27).

6. Filtre à carburant selon la revendication 4 ou 5,
**caractérisé en**
**ce que** un dispositif de guidage (33) est prévu, qui présente au moins un élément de guidage (34) du côté de l'élément de filtre et au moins un élément de guidage (35) du côté du logement de filtre, qui lors de l'insertion de l'élément de filtre (3) dans le logement de filtre (2) coopèrent selon le principe clé - verrou, de telle sorte qu'ils permettent, seulement quand les éléments de guidage (34, 35) correspondent l'un à l'autre, la coopération entre les éléments de positionnement (26, 27) et/ou entre la rampe (27) et la surface de glissement (26).

7. Filtre à carburant selon une des revendications 4 à 6,
**caractérisé en**
- **ce que** la rampe (27) le long de son extension totale ou au moins le long d'au moins une portion d'extension (36) est délimitée radialement à l'intérieur et/ou radialement à l'extérieur par au moins une paroi de guidage (35) faisant saille axialement par-dessus la rampe (27),
- ce que le tenon (22) présente une portion de guidage (34) faisant saillie axialement, qui présente la surface de glissement (26) et qui est positionnée et dimensionnée de telle sorte qu'elle s'étende radialement à côté de la paroi de guidage respective (35) et amène ainsi la surface de glissement (26) à reposer axialement sur la rampe (27) et maintienne le tenon (22) en espacement axial par rapport à la paroi de guidage (35) respective.

8. Filtre à carburant selon une des revendications 1 à 7,
**caractérisé en**
**ce que** le circuit retour (6) communique en outre par l'intermédiaire d'un étranglement d'aération (24) avec l'espace brut (13), dont la résistance à l'écoulement est plus grande que la résistance à l'écoulement à travers l'élément de filtre (3) et à travers l'échappement (5) lorsque le circuit retour (6) est fermé.

9. Filtre à carburant selon une des revendications 1 à 8,
**caractérisé en**
**ce que** un capteur de pression (21) pour mesurer la pression du carburant du côté purifié est prévu.

10. Elément de filtre à carburant pour un filtre à carburant (1), notamment selon une des revendications 1 à 9, dans lequel l'élément de filtre (3) est conçu comme un élément de filtre annulaire et présente au moins une rondelle d'extrémité axiale (17), de laquelle un élément d'obturation (20), notamment un tenon (22), dépasse axialement et de manière excentrée, qui obture, lorsque l'élément de filtre (3) est correctement inséré dans un logement de filtre (2) du filtre à carburant (1), un circuit de retour (6) du côté brut du logement de filtre (2).
